# EUROPÄISCHE PATENTANMELDUNG

(11) **EP 0 908 700 A2**
(43) Veröffentlichungstag der Anmeldung: **14.04.1999**
(21) Anmeldenummer: 98118690.1
(22) Anmeldetag: 02.10.1998
(51) Int. Cl.: G01C 21/20, G07C 5/08

(54) **Navigationsgerät eines Kraftfahrzeugs**

(30) Priorität: 10.10.1997 DE 19744724
(71) Anmelder: ROBERT BOSCH GMBH, 70442 Stuttgart (DE)
(72) Erfinder: Wannke, Dietmar, 72768 Reutlingen (DE)

(57) **Zusammenfassung**

Ein Navigationsgerät eines Kraftfahrzeugs, das zur Verbindung mit einer Positionsbesimmungseinrichtung und einer Weglängensensoreinrichtung vorgesehen ist und einen Massenspeicher (5) für Straßennetze, eine Eingabeeinrichtung (7) für Fahrtziele und eine Ausgabeeinrichtung (8) für Fahrthinweise zur Erreichung eines Fahrtziels aufweist, erhält einen Zweitnutzen durch eine elektronische Erstellung eines Fahrtenbuchs dadurch, daß es zur Erstellung eines Fahrtenbuchs zur Eingabe einer Fahrtart und Abspeicherung sowie Ausgabe wenigstens von Fahrtziel, Fahrtart, Fahrtdatum und am Fahrtziel zurückgelegte Weglänge eingerichtet ist.

## Beschreibung

Die Erfindung betrifft ein Navigationsgerät eines Kraftfahrzeugs, das zur Verbindung mit einer Positionsbestimmungseinrichtung und einer Weglängensensoreinrichtung vorgesehen ist und einen Massenspeicher für Straßennetze, eine Eingabeeinrichtung für Fahrtziele und eine Ausgabeeinrichtung für Fahrthinweise zur Erreichung des Fahrziels aufweist.

Derartige Navigationsgeräte sind häufig mit Satellitensignalempfängern und bordeigenen Sensoren zur Positionsbestimmung ausgestattet. Durch den Empfang der Positionssignale der Satelliten eines globalen Positionsbestimmungssystems, beispielsweise GPS, läßt sich die absolute Position zu jeder Zeit ungefähr bestimmen. Über die bordeigenen Sensoren, die beispielsweise Weglängen- und Fahrtrichtungssensoren sein können, ist ergänzend eine genauere Positionierung möglich. Die Weglängensensoreinrichtung ist beispielsweise Teil des Tachometers. Die Funktion der Navigationsgeräte besteht darin, stets die aktuelle Fahrzeugposition im Straßenplan zu ermitteln und für ein eingegebenes Fahrtziel eine Route zu bestimmen, auf der der Fahrer mit entsprechenden Fahrtrichtungshinweisen zum Fahrtziel geführt wird.

In manchen Fällen ist es für einen Autofahrer aus Abrechnungsgründen bzw. aus steuerlichen Gründen erforderlich, ein Fahrtenbuch zu führen. Dies geschieht herkömmlich durch handschriftliche Eintragung der jeweiligen Fahrten in ein entsprechendes Fahrtenbuch, in dem die jeweiligen Fahrten durch die Fahrtarten "Dienstfahrten", "Privatfahrten" oder "sonstige Fahrten" gekennzeichnet werden. Zur Bestimmung der Fahrtlänge wird beispielsweise der Anfangs-Kilometerstand und der End-Kilometerstand vom Tachometer abgelesen und aus der Differenz die Fahrtlänge errechnet. Weiterhin ist es aus gesetzlichen oder fiskalischen Gründen im allgemeinen erforderlich, noch ergänzende Angaben, beispielsweise über Anlaß der Fahrt und aufgesuchte Gesprächspartner, zu dokumentieren.

Es sind seit einiger Zeit auch sogenannte elektronische Fahrtenbücher im Handel, wie sich beispielsweise aus einer Produktübersicht in "Auto-Bild" vom 31. Januar 1997, Seite 42, ergibt. Einige der elektronischen Fahrtenbücher sind an den Tachometer des Kraftfahrzeugs anschließbar, so daß der Tachometerstand auf Knopfdruck automatisch in die elektronische Aufzeichnung übernommen werden kann. Die hierdurch gewonnene Hilfe ist allerdings begrenzt, da in den meisten Fällen Fahrtziele, Gesprächspartner, Datum, Name des Fahrers usw. nachgetragen werden müssen, wenn die abgespeicherten Daten über einen Computer und einen Drucker ausgegeben werden.

Die vorliegende Erfindung geht von der Problemstellung aus, den Nutzen eines Navigationsgeräts der eingangs erwähnten Art zu erweitern.

Der Erfindung liegt die Erkenntnis zugrunde, daß in einem Navigationsgerät der eingangs erwähnten Art nahezu alle Daten existieren, die für die Führung eines Fahrtenbuchs benötigt werden.

Erfindungsgemäß ist daher ein Navigationsgerät der eingangs erwähnten Art dadurch gekennzeichnet, daß es zur Erstellung eines Fahrtenbuchs zur Eingabe einer Fahrtart und Abspeicherung sowie Ausgabe wenigstens von Fahrtziel, Fahrtart, Fahrtdatum und am Fahrtziel zurückgelegte Weglänge eingerichtet ist.

Das erfindungsgemäße Navigationsgerät erfüllt somit den Zusatznutzen der nahezu vollautomatischen Erstellung der Angaben für ein Fahrtenbuch. Ergänzend kann beispielsweise auch noch die Position bei Fahrtbeginn ausgebbar sein. Dabei kann es zweckmäßig sein, daß das Navigationsgerät wenigstens für eine Fahrtart zur zusätzlichen Eingabe, Abspeicherung und Ausgabe von Fahrtanlaß und Gesprächspartner eingerichtet ist, um so beispielsweise für "Dienstfahrten" unmittelbar während oder nach der Fahrt die nötigen Daten eingeben zu können.

Besonders zweckmäßig ist es, die Daten zur Erstellung des Fahrtenbuches in einem herausnehmbaren Zwischenspeicher des Navigationsgeräts zu speichern, insbesondere auf einer in das Gerät einschiebbaren Chipkarte. Der Inhalt des Zwischenspeichers kann dann zu gegebener Zeit zur Erstellung einer Hardcopy des Fahrtenbuches ausgedruckt werden.

Alternativ ist es möglich, die Daten zur Erstellung des Fahrtenbuches in einem fest installierten Speicher abzulegen, der über eine Schnittstellle, beispielsweise mit einem Laptop auslesbar ist.

Die Erfindung soll im folgenden anhand von in der Zeichnung dargestellten Ausführungsbeispielen näher erläutert werden. Es zeigen:
- Figur 1 -: ein schematisches Blockschaltbild eines erfindungsgemäßen Navigationsgeräts
- Figur 2 -: ein Flußdiagramm für die Funktion des Navigationsgeräts gemäß Figur 1 zur Erstellung des Fahrtenbuchs.

In dem erfindungsgemäßen Navigationsgerät sind an einen Rechner 1 ein Wegsensor 2 und ein Richtungssensor 3 als lokale Positionsbestimmungssensoren angeschlossen. Zur Ergänzung der Positionsbestimmung dient eine Satellitenempfangseinrichtung 4, über die Positionsdaten mehrerer empfangbarer Satelliten empfangen und ausgewertet werden können. Die Information über Straßennetze erhält der Rechner 1 über ein angeschlossenes CD-ROM-Laufwerk 5, in das eine CD-ROM mit einer digitalen Strassenkarte eingesetzt wird. Angeschlossen ist ferner eine Uhr 6 mit einer zusätzlichen Datumsfunktion.

Die Bedienung des Navigationsgeräts erfolgt über eine Bedieneinheit 7 und ein Display 8, über das vorzugsweise eine Menüführung des Benutzers stattfindet.

An den Rechner 1 ist zweckmäßigerweise ein Speicher 9 angeschlossen, in dem alle für ein Datenbuch erforderlichen Daten einschreibbar sind. Der Speicher 9 ist vorzugsweise mit einem entnehmbaren Speichermedium 9a, insbesondere als Chipkarte, Magnetkarte, Magnetband o.ä. ausgebildet, auf dem die einzelnen Fahrten automatisch abgespeichert werden. Für die Abrechnung der einzelnen Fahrten kann das Speichermedium 9a entnommen und beispielsweise auf einem Computer separat ausgewertet werden.

Alternativ hierzu ist der Rechner 1 mit einer Schnittstelle 10 versehen, über die die einzelnen Fahrten ausgelesen und ausgedruckt oder anderweitig ausgewertet werden können.

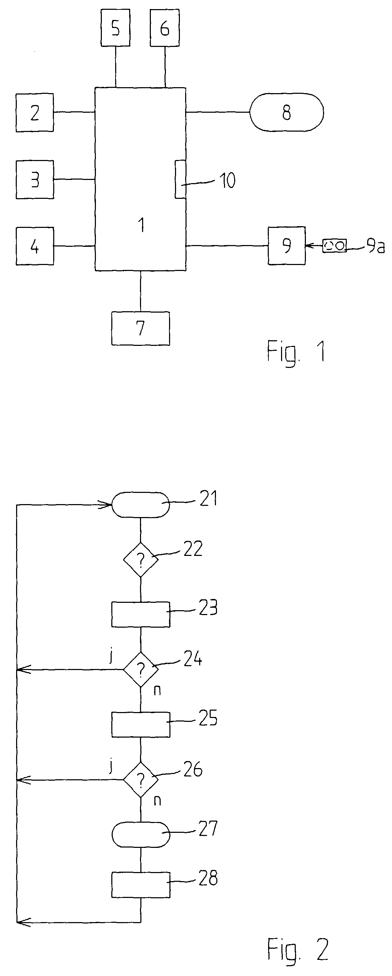

Der Funktionsablauf ergibt sich beispielhaft in der in Figur 2 dargestellten Weise und kann als Programm im Navigationsgerät implementiert sein. Beim jeweiligen Programmstart 21 wird in das Navigationsgerät das Fahrtziel eingegeben, so daß eine geeignete Fahrtroute berechnet werden kann. Ist beim Programmstart die Funktion "Fahrtenbuch" initialisiert worden, wird über das Display 8 im Schritt 22 abgefragt, ob eine Dienstfahrt, eine Privatfahrt oder eine sonstige Fahrt (beispielsweise zu Servicezwecken) geplant ist. Nach einer entsprechenden Eingabe setzt der Rechner 1 im Schritt 23 eine entsprechende Kennzeichnung. Im Schritt 24 wird über das Display 8 eine Bestätigung der gesetzten Kennzeichnung durch die Frage, ob eine Änderung gewünscht wird oder nicht verlangt. Wird eine Änderung gewünscht, wird das System zum Anfangsschritt 21 zurückgesetzt. Andernfalls wird im Schritt 25 die Fahrtroute mit allen erforderlichen Zusatzdaten unter Berücksichtigung der im Schritt 23 vergebenen Kennzeichnung abgespeichert.

Im Schritt 26 wird abgefragt, ob eine neue Route eingegeben werden soll. Bei der Eingabe "ja" springt das Programm auf den Anfangsschritt 21. Bei "nein" besteht die Möglichkeit der Ausgabe einer oder aller gespeicherten Werte im Schritt 27. Zusätzlich sind die Fahrten geordnet in Tabellenform auf dem Display 8 ausgebbar. Im Schritt 28 kann die Anzeige gelöscht werden, so daß das Programm wieder auf Startschritt 21 zurückspringt.

Es ist ohne weiteres erkennbar, daß bei dem Abfrageschritt 24 auch zusätzliche Angaben abgefragt werden können, wie beispielsweise Fahrtanlaß und aufgesuchte Gesprächspartner. Diese Angaben können als Zusatzinformation im Speicherschritt 25 mit abgespeichert werden, um die für das Fahrtenbuch erforderlichen Anforderungen zu erfüllen.

Die Erfindung bietet den Vorteil, daß ein vorhandenes Navigationsgerät nur geringfügig, vorzugsweise nur durch Software, erweitert werden muß, um die Fahrtenbuchfunktion auszuüben. Hierdurch entstehen nur geringe Zusatzkosten. Zusätzliche Installationen innerhalb des Kraftfahrzeugs, z.B. ein Anschluß an den Tachometer, wie sie bei dem bekannten elektronischen Fahrtenbüchern vorgesehen sind, sind nicht erforderlich.

Die Fahrtenbuchfunktion läßt sich mit einfachsten Bedienschritten verwenden. In der einfachsten Ausführung muß nur die Fahrtart und das Fahrtziel eingegeben werden, da der Startpunkt dem Navigationsgerät stets bekannt ist. Alle übrigen Fahrtenbuchdaten kann das System automatisch ermitteln und abspeichern. Die Eingabe von ergänzenden Zusatzdaten ist möglich. Da das Navigationsgerät erkennt, ob ein eingegebenes Fahrtziel erreicht worden ist oder nicht, ist auch ein manipuliersicherer Nachweis aller Fahrten möglich. Die Auswertung erfolgt in einfacher Weise elektronisch über die Schnittstelle 10 oder die Auswertung der elektronisch auf dem Speichermedium 9a abgespeicherten Daten oder über den Ausdruck der Daten auf einer Hardcopy, wenn ein entsprechender Drucker mit dem Navigationsgerät verbindbar ist.

Die für ein Fahrtenbuch benötigten Daten können in Abhängigkeit vom jeweiligen Einzelfall und von aktuell geltenden Vorschriften variieren und entsprechend im Rahmen der Erfindung angepaßt werden.

## Patentansprüche

1. Navigationsgerät eines Kraftfahrzeugs, das zur Verbindung mit einer Positionsbesimmungseinrichtung und einer Weglängensensoreinrichtung vorgesehen ist und einen Massenspeicher (5) für Straßennetze, eine Eingabeeinrichtung (7) für Fahrziele und eine Ausgabeeinrichtung (8) für Fahrthinweise zur Erreichung eines Fahrtziels aufweist, **dadurch gekennzeichnet, daß** es zur Erstellung eines Fahrtenbuchs zur Eingabe einer Fahrtart und Abspeicherung sowie Ausgabe wenigstens von Fahrtziel, Fahrtart, Fahrtdatum und am Fahrtziel zurückgelegte Weglänge eingerichtet ist.

2. Navigationsgerät nach Anspruch 1, dadurch gekennzeichnet, daß es zusätzlich wenigstens zur Ausgabe der Position bei Fahrtbeginn eingerichtet ist.

3. Navigationsgerät nach Anspruch 1 oder 2, dadurch gekennzeichnet, daß es wenigstens für eine Fahrtart zur zusätzlichen Eingabe, Abspeicherung und Ausgabe von Fahrtanlaß und Gesprächspartner eingerichtet ist.

4. Navigationsgerät nach einem der Ansprüche 1 bis 3, dadurch gekennzeichnet, daß als Speicher (9) für die Daten zur Erstellung des Fahrtenbuchs eine in das Gerät einschiebbare Chipkarte (9a) vorgesehen ist.

5. Navigationsgerät nach einem der Ansprüche 1 bis 3 dadurch gekennzeichnet, daß ein fest installierter Speicher (9) über eine Schnittstelle (10) auslesbar ist.
